(19) Europäisches Patentamt
European Patent Office
Office européen des brevets

(11) **EP 2 685 525 B1**

(12) **EUROPEAN PATENT SPECIFICATION**

(45) Date of publication and mention
of the grant of the patent:
**02.09.2020 Bulletin 2020/36**

(51) Int Cl.:
**H01M 2/16** *(2006.01)*      **H01M 10/0525** *(2010.01)*
**H01M 4/587** *(2010.01)*      **H01M 10/0587** *(2010.01)*

(21) Application number: **13175897.1**

(22) Date of filing: **10.07.2013**

(54) **Energy storage device**

Energiespeichereinrichtung

Dispositif de stockage d'énergie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2012 JP 2012156434
13.06.2013 JP 2013124814**

(43) Date of publication of application:
**15.01.2014 Bulletin 2014/03**

(73) Proprietor: **GS Yuasa International Ltd.
Kisshoin, Minami-ku,
Kyoto-shi, Kyoto 601-8520 (JP)**

(72) Inventors:
• **Miyazaki, Akihiko
Kyoto-shi, Kyoto 601-8520 (JP)**

• **Mori, Sumio
Kyoto-shi, Kyoto 601-8520 (JP)**
• **Kako, Tomonori
Kyoto-shi, Kyoto 601-8520 (JP)**
• **Nakai, Kenta
Kyoto-shi, Kyoto 601-8520 (JP)**

(74) Representative: **Vossius & Partner
Patentanwälte Rechtsanwälte mbB
Siebertstrasse 3
81675 München (DE)**

(56) References cited:
**EP-A1- 2 650 949      JP-A- 2008 277 201
US-A1- 2010 178 544    US-A1- 2011 189 529
US-A1- 2011 305 940**

**Description**

The present invention relates to an energy storage device including a positive electrode, a negative electrode, a separator disposed between the positive electrode and the negative electrode, and a non-aqueous electrolyte.

To solve recent global environmental issues, the shift from gasoline vehicles to hybrid electric vehicles and electric vehicles has been promoted and the use of electric bicycles has been increased. A variety of energy storage devices such as lithium ion secondary batteries are widely used in these applications. For this reason, energy storage devices having increased capacity have been demanded. To meet this demand, an energy storage device that attains increased capacity by reducing the thickness of a separator has been proposed in the related art (for example, see Patent Literature 1: Japanese Unexamined Patent Application Publication No. 2006-32246).

US 2010/178544 A1 relates to a polyolefin microporous membrane base for a nonaqueous secondary battery separator, a method for producing the same, a nonaqueous secondary battery separator, and a nonaqueous secondary battery.

US 2011/305940 A1 relates to a method for producing a porous laminate and the porous laminate obtained by using the producing method.

EP 2 650 949 A1, a document pertaining to the state of the art according to Article 54(3) EPC, relates to an energy storage device including a positive electrode and a negative electrode that are insulated from each other with a separator interposed therebetween, and a non-aqueous electrolyte.

JP 2008 277201 A relates to a nonaqueous electrolyte secondary battery that is provided with a positive electrode including a positive electrode current collector and a positive electrode active material layer, a positive electrode including a negative electrode current collector and a negative electrode active material layer, a separator arranged between the positive electrode active material layer and the negative electrode active material layer, a first metallic foil with a positive electrode potential, a second metallic foil with a negative electrode potential, and a metallic foil laminated body composed of an insulator arranged between the positive electrode metallic foil and the negative electrode metallic foil.

US 2011/189529 A1 relates to a sodium secondary battery comprising a positive electrode, a negative electrode, a separator disposed between the positive electrode and the negative electrode, and a nonaqueous electrolytic solution, wherein the separator is composed of a porous laminate film in which a heat resistant porous layer and a porous film are stacked each other, and the heat resistant porous layer is disposed on a positive electrode side.

An object of the present invention is to provide an energy storage device that can suppress transient degradation of output even when the energy storage device has a thinner separator.

To achieve the above object, an energy storage device according to one aspect of the present invention is an energy storage device comprising: a positive electrode; a negative electrode; a separator disposed between the positive electrode and the negative electrode; and a non-aqueous electrolyte, wherein the negative electrode includes non-graphitizable carbon as a negative electrode active material, and the separator has a thickness of 10 to 30 $\mu$m and an air permeability of 10 to 180 sec/100 cc, and wherein the positive electrode material layer has an area of 0.3 to 100 m$^2$.

**Brief Description of Drawings**

[FIG. 1]

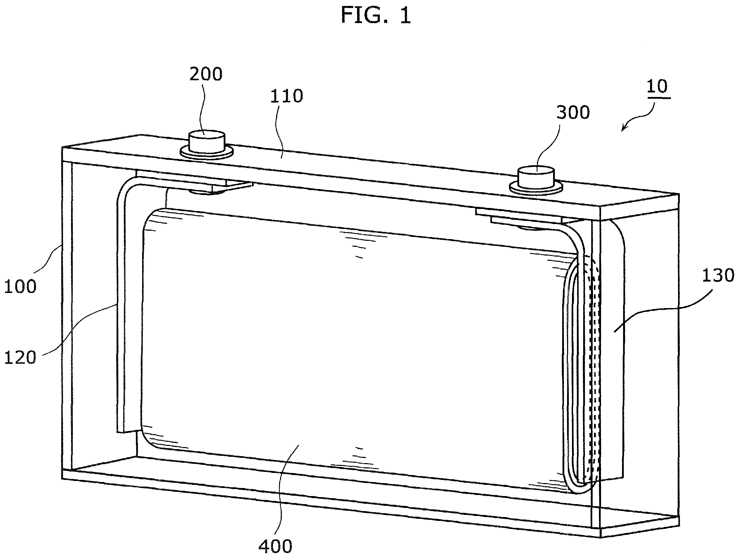

FIG. 1 is a perspective view of an appearance of an energy storage device according to one embodiment of the present invention.
[FIG. 2]

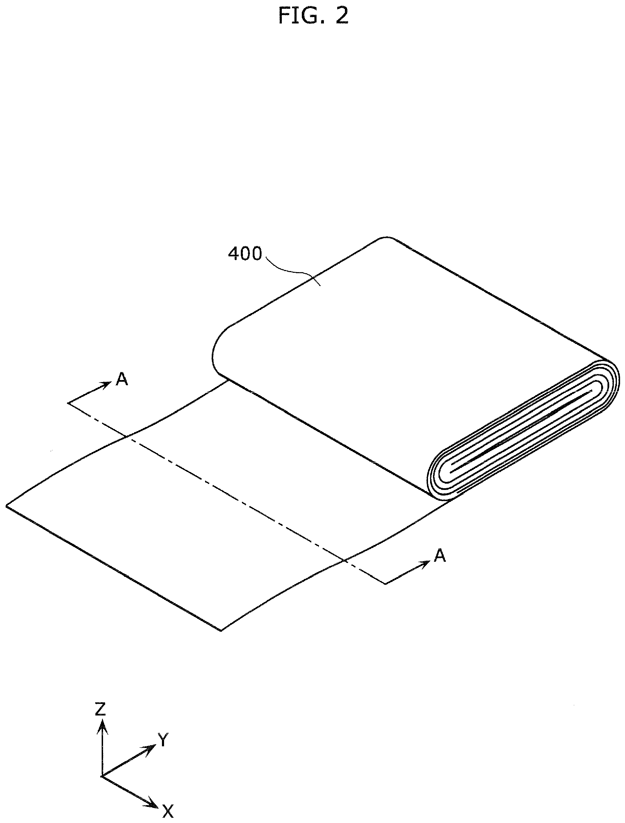

FIG. 2 is a perspective view illustrating a configuration of an electrode assembly according to the embodiment of the present invention.
[FIG. 3]

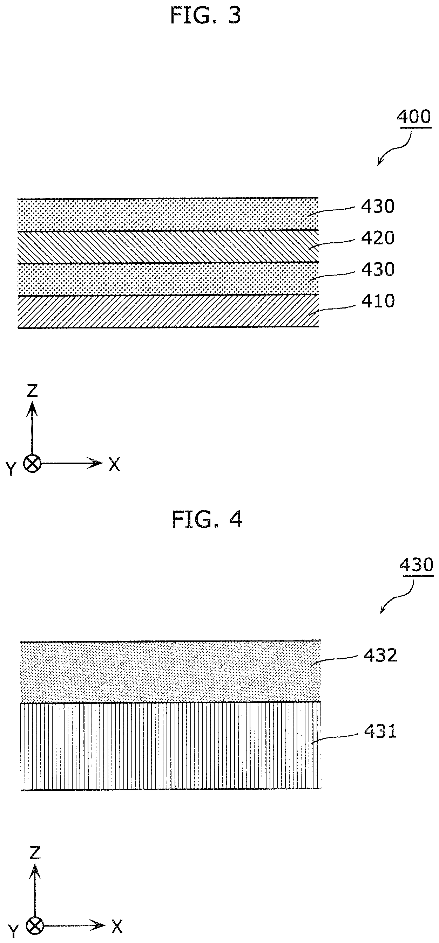

FIG. 3 is a sectional view illustrating a configuration of the electrode assembly according to the embodiment of the present invention.
[FIG. 4]
FIG. 4 is a sectional view illustrating a configuration of a separator according to the embodiment of the present invention.
[FIG. 5]

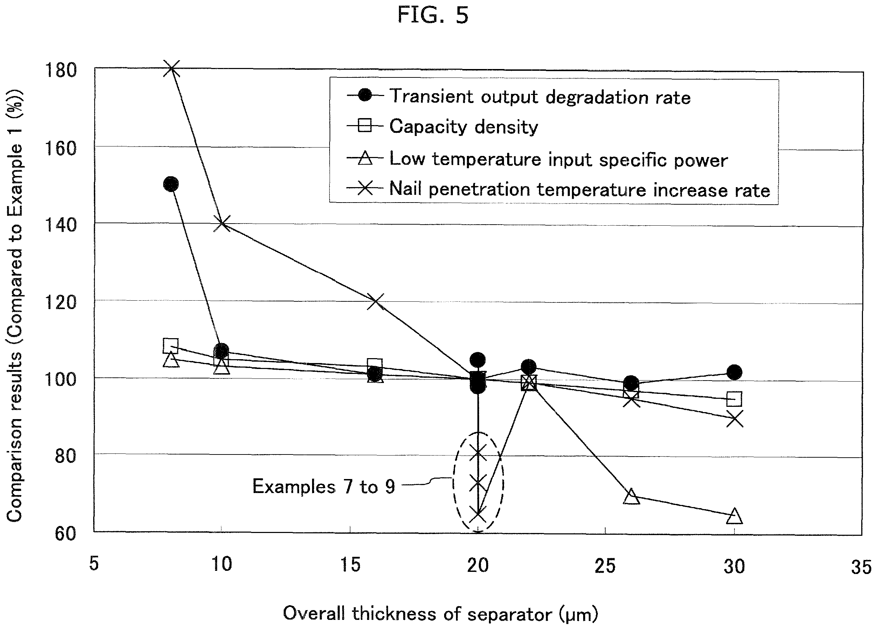

FIG. 5 is a diagram showing the results of an evaluation test wherein the thickness of the separator varies.
[FIG. 6]

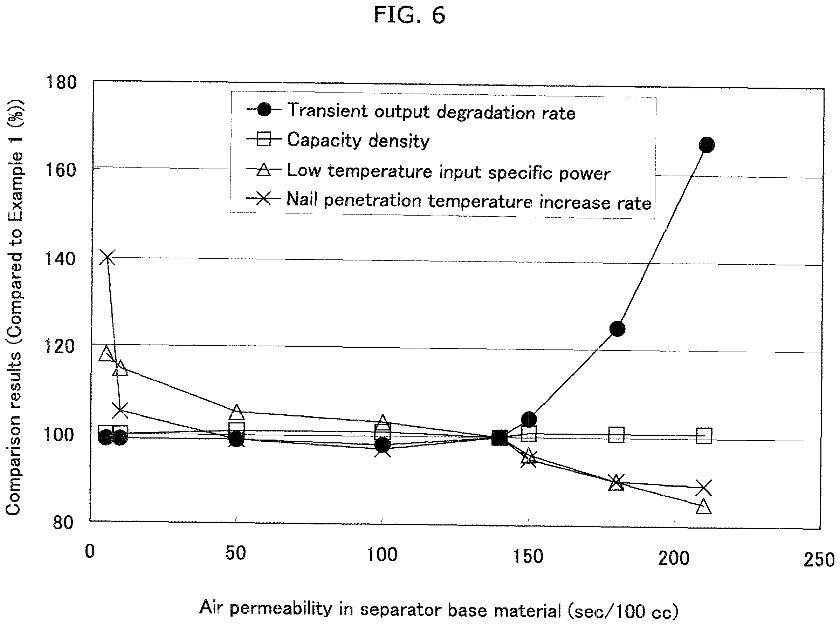

FIG. 6 is a diagram showing the results of an evaluation test wherein the air permeability in the separator varies.
[FIG. 7]

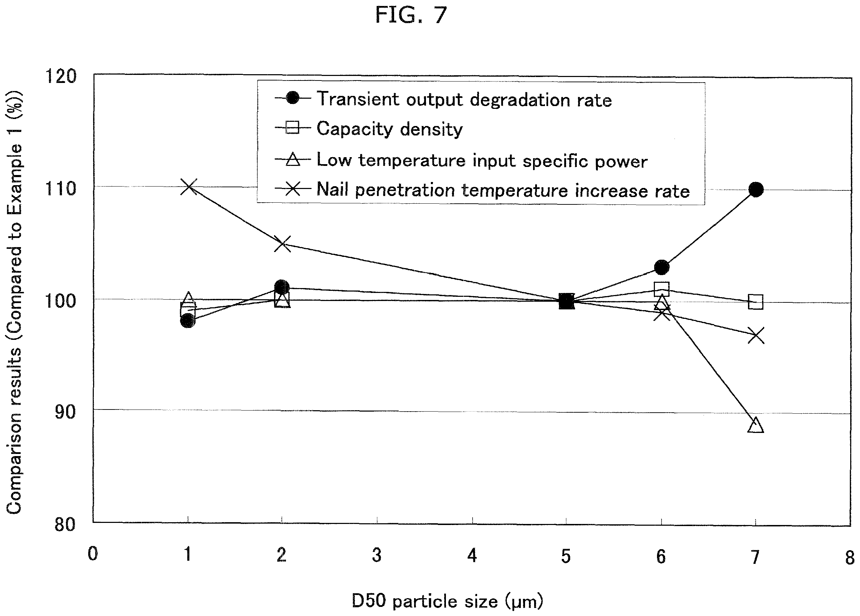

FIG. 7 is a diagram showing the results of an evaluation test wherein the particle size of a negative electrode active material varies.

[FIG. 8A]

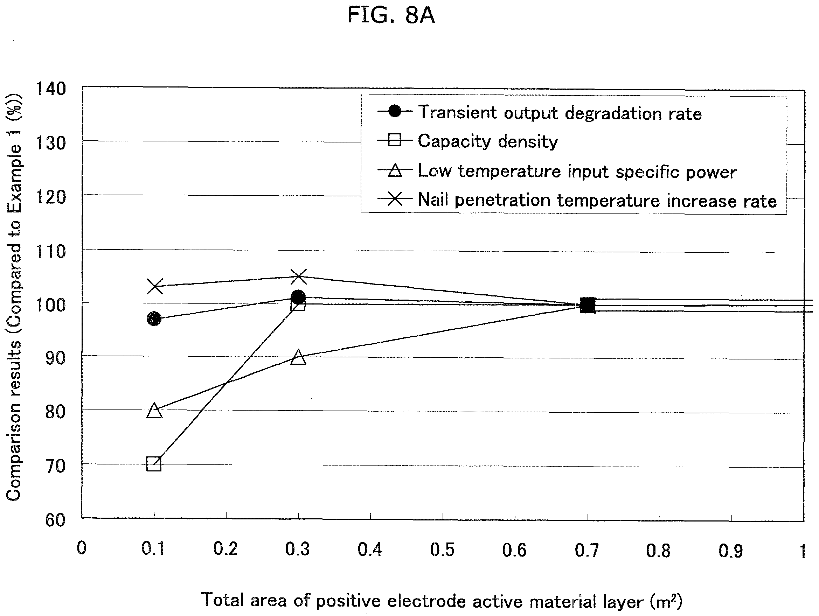

FIG. 8A is a diagram showing the results of an evaluation test wherein the area of a positive electrode active material layer varies.

[FIG. 8B]

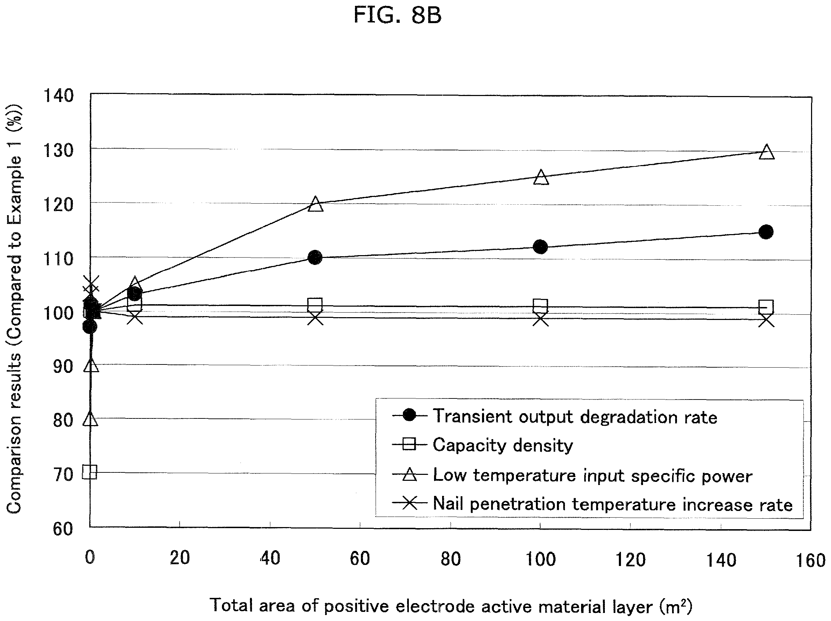

FIG. 8B is a diagram showing the results of an evaluation test wherein the area of the positive electrode active material layer varies.

[FIG. 9]

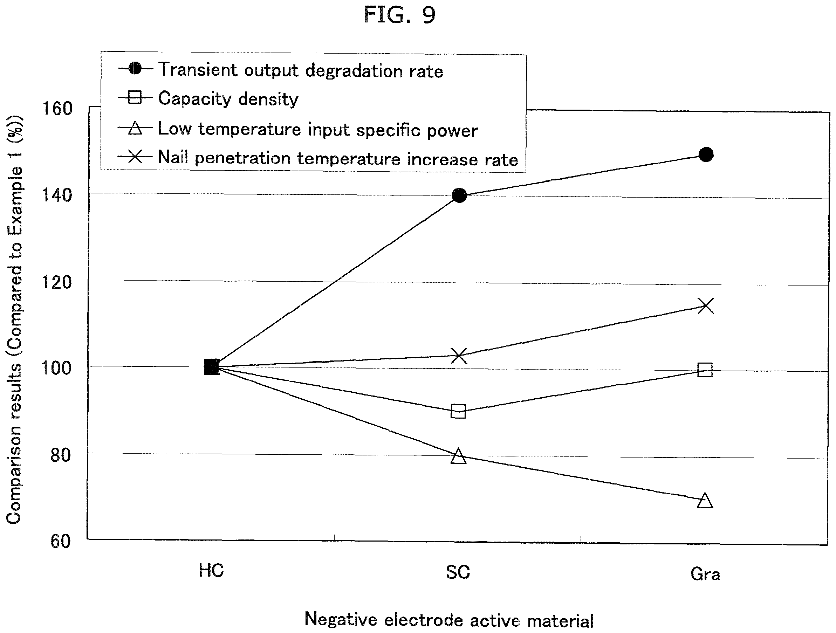

FIG. 9 is a diagram showing the results of an evaluation test wherein the kind of negative electrode active materials varies.

**Description of Embodiments**

In the conventional energy storage device described above including a thinner separator, the output may temporarily reduce when the energy storage device is charged and discharged. Particularly, when the conventional energy storage device is repeatedly charged and discharged at high-rate cycles, the output may temporarily drop significantly. Such a temporary drop in the output (hereinafter, referred to as transient degradation of output) can be improved by switching the charge and discharge of the energy storage device at high-rate cycles to charge and discharge at low-rate cycles or by not performing charge and discharge for a predetermined period of time. The operation condition of the charge and discharge needs to be changed to an operation condition other than the high-rate cycles.

The present invention has been made to solve the above problems. An object of the present invention is to provide an energy storage device that can suppress transient degradation of output even when the energy storage device has a thinner separator.

To achieve the above object, the energy storage device according to one aspect of the present invention is an energy storage device including a positive electrode, a negative electrode, a separator disposed between the positive electrode and the negative electrode, and a non-aqueous electrolyte, wherein the negative electrode includes non-graphitizable carbon as a negative electrode active material, and the separator has a thickness of 10 to 30 $\mu$m and an air permeability of 10 to 180 sec/100 cc. Here, the range of numeric values of A to B designates the range of A or more and B or less. Namely, 10 to 30 $\mu$m designates 10 $\mu$m or more and 30 $\mu$m or less, and 10 to 180 sec/100 cc designates 10 sec/100 cc or more and 180 sec/100 cc or less. The same is true below.

According to this, in the energy storage device, the negative electrode includes non-graphitizable carbon as a negative electrode active material, and the separator has a thickness of 10 to 30 $\mu$m and an air permeability of 10 to 180 sec/100 cc. Here, by reducing the thickness of the separator, the separator is easily influenced by expansion and contraction of the negative electrode during charge and discharge at high-rate cycles, causing transient degradation of output at high-rate cycles. The present inventors found, as a result of intensive research, that the energy storage device having the above configuration can suppress transient degradation of output even when the energy storage device has a thinner separator. Namely, the present inventors found that when non-graphitizable carbon is used as a negative electrode active material, the thickness of the separator is controlled to fall within the range of 10 to 30 $\mu$m, and the air permeability is controlled to fall within the range of 10 to 180 sec/100 cc, the influence given to the separator from the negative electrode can be reduced, and transient degradation of output in the energy storage device can be suppressed. Thereby, transient degradation of output can be suppressed in the energy storage device having a thinner separator.

The non-graphitizable carbon may have the average particle size D50 of 2 to 6 $\mu$m.

Here, the present inventors found, as a result of intensive research, that in the energy storage device including a thinner separator, the temperature during nail penetration will increase at an average particle size D50 of the non-graphitizable carbon in the negative electrode less than 2 $\mu$m, and the input specific power at a low temperature will reduce at an average particle size D50 more than 6 $\mu$m. For this reason, when a non-graphitizable carbon having the average particle size D50 of 2 to 6 $\mu$m is used as the negative electrode active material in the energy storage device, increase in the temperature during nail penetration and reduction in the input specific power at a low temperature can also be suppressed while transient degradation of output can be suppressed.

The separator may have a thickness of 22 $\mu$m or less.

Here, when the separator is thicker, the amount of an electrolyte solution needs to be increased, and capacity density and input and output specific powers will reduce. The present inventors found, as a result of intensive research, that when the separator in the energy storage device has a thickness more than 22 $\mu$m, capacity density and input specific power at a low temperature will reduce. For this reason, by providing a separator having a thickness of 22 $\mu$m or less in the energy storage device, capacity density and input specific power at a low temperature can be improved while transient degradation of output can be suppressed.

The separator may have a thickness of 20 $\mu$m or more.

Here, the present inventors found, as a result of intensive research, that when in the energy storage device including a thinner separator, the separator has a thickness less than 20 $\mu$m, the temperature during nail penetration will increase. For this reason, by providing a separator having a thickness of 20 $\mu$m or more in the energy storage device, increase in the temperature during nail penetration can be suppressed while transient degradation of output is suppressed.

Moreover, the separator may have an air permeability of 50 sec/100 cc or more.

Here, the present inventors found, as a result of intensive research, that when in the energy storage device including a thinner separator, the separator has an air permeability less than 50 sec/100 cc, the temperature during nail penetration will increase, and a micro-short circuit will occur. For this reason, by providing a separator having an air permeability of 50 sec/100 cc or more in the energy storage device, increase in the temperature during nail penetration can be suppressed and occurrence of the micro-short circuit can also be suppressed while transient degradation of output is suppressed.

The separator may have an air permeability of 150 sec/100 cc or less.

Here, the present inventors found, as a result of intensive research, that when in the energy storage device including a thinner separator, the separator has an air permeability of 150 sec/100 cc or less, transient degradation of output can be suppressed more significantly while transient degradation of output is suppressed. For this reason, by providing a separator having an air permeability of 150 sec/100 cc or less in the energy storage device, transient degradation of output can be suppressed.

Moreover, the separator may include a base material layer and an inorganic filler layer.

Here, the present inventors found, as a result of intensive research, that when in the energy storage device including a thinner separator, the separator includes an inorganic filler layer, the temperature during nail penetration can be reduced. For this reason, by providing a separator including an inorganic filler layer in the energy storage device, the temperature during nail penetration can be reduced while transient degradation of output is suppressed.

Hereinafter, the energy storage device according to an embodiment of the present invention will be described with reference to the drawings. The embodiment described below shows only one preferred specific example of the present invention. The numerical values, shapes, materials, structural elements, the arrangement and connection of the structural elements, and the like shown in the following embodiment are merely examples, and therefore do not limit the scope of the present invention. Among the structural elements in the following embodiment, structural elements not recited in any one of independent claims that indicate the broadest concepts of the present invention are described as any structural elements that constitute a more preferable embodiment. Hereinafter, the range of numeric values of A to B designates the range of A or more and B or less.

First, a configuration of an energy storage device 10 will be described.

FIG. 1 is a perspective view of an appearance of the energy storage device 10 according to the embodiment of the present invention. This drawing is a see-through view showing the inside of a container. FIG. 2 is a perspective view illustrating a configuration of an electrode assembly 400 according to the embodiment of the present invention. This drawing is a view of the wound electrode assembly 400 illustrated in FIG. 1 in which the electrode assembly 400 is partially developed.

The energy storage device 10 is a secondary battery that can charge and discharge electricity. More specifically, the energy storage device 10 is a non-aqueous electrolyte secondary battery such as lithium ion secondary batteries. For example, the energy storage device 10 is a secondary battery that is used for hybrid electric vehicles (HEV) and performs charge and discharge at high-rate cycles. The energy storage device 10 is not limited to the non-aqueous electrolyte secondary battery, and may be a secondary battery other than the non-aqueous electrolyte secondary battery, or may be a capacitor.

As illustrated in these drawings, the energy storage device 10 includes a container 100, a positive electrode terminal 200, and a negative electrode terminal 300. The container 100 includes a cover plate 110 that is the top wall of the container. Inside of the container 100, the electrode assembly 400, a positive electrode current collector 120, and a negative electrode current collector 130 are disposed. A liquid such as an electrolyte solution (non-aqueous electrolyte) is sealed within the container 100 in the energy storage device 10, although the liquid is not illustrated.

The container 100 is composed of a bottomed housing body that is metallic and has a rectangular tube shape, and the cover plate 110 that is metallic and closes an opening of the housing body. The container 100 is configured to be capable of hermetically sealing the inside of the container, for example, by welding the cover plate 110 to the housing body after the electrode assembly 400 and the like are accommodated inside of the container.

The electrode assembly 400 is a member that includes a positive electrode, a negative electrode, and a separator, and is capable of storing electricity. Specifically, the electrode assembly 400 is formed as illustrated in FIG. 3. Namely, the negative electrode, the separator, and the positive electrode are sequentially layered with the separator being sandwiched between the negative electrode and the positive electrode, and wound into an oblong electrode assembly. In the drawing, the electrode assembly 400 has an oblong shape, but may have a circular or oval shape. The formation of the electrode assembly 400 is not limited to formation by winding. The electrode assembly 400 may be formed by laminating flat plate electrodes. The detailed configuration of the electrode assembly 400 will be described later.

The positive electrode terminal 200 is an electrode terminal electrically connected to the positive electrode in the electrode assembly 400. The negative electrode terminal 300 is an electrode terminal electrically connected to the negative electrode in the electrode assembly 400. Namely, the positive electrode terminal 200 and the negative electrode terminal 300 are metallic electrode terminals for extracting the electricity stored in the electrode assembly 400 from the energy storage device 10 to an external space thereof and introducing electricity into the internal space of the energy storage device 10 to store electricity in the electrode assembly 400.

The positive electrode current collector 120 is disposed between the positive electrode in the electrode assembly 400 and a side wall of the container 100. The positive electrode current collector 120 is a conductive and rigid member electrically connected to the positive electrode terminal 200 and the positive electrode in the electrode assembly 400. The positive electrode current collector 120 as well as the positive electrode in the electrode assembly 400 is formed of aluminum. The negative electrode current collector 130 is disposed between the negative electrode in the electrode assembly 400 and a side wall of the container 100. The negative electrode current collector 130 is a conductive and rigid member electrically connected to the negative electrode terminal 300 and the negative electrode in the electrode assembly 400. The negative electrode current collector 130 as well as the negative electrode in the electrode assembly 400 is formed of copper.

A variety of non-aqueous electrolytes (electrolyte solutions) to be sealed within the container 100 can be selected. Examples of organic solvents for the non-aqueous electrolyte include ethylene carbonate, propylene carbonate, butylene carbonate, trifluoropropylene carbonate, $\gamma$-butyrolactone, $\gamma$-valerolactone, sulfolane, 1,2-dimethoxyethane, 1,2-diethoxyethane, tetrahydrofuran, 2-methyltetrahydrofuran, 2-methyl-1,3-dioxolane, dioxolane, fluoroethyl methyl ether, ethylene glycol diacetate, propylene glycol diacetate, ethylene glycol dipropionate, propylene glycol dipropionate, methyl acetate, ethyl acetate, propyl acetate, butyl acetate, methyl propionate, ethyl propionate, propyl propionate, dimethyl carbonate, diethyl carbonate, ethylmethyl carbonate, methylpropyl carbonate, ethylpropyl carbonate, dipropyl carbonate, methylisopropyl carbonate, ethylisopropyl carbonate, diisopropyl carbonate, dibutyl carbonate, acetonitrile, fluoroacetonitrile, alkoxy- and halogen-substituted cyclic phosphazenes or linear phosphazenes such as ethoxypentafluorocyclotriphosphazene, diethoxytetrafluorocyclotriphosphazene, and phenoxypentafluorocyclotriphosphazene, phosphoric acid esters such as triethyl phosphate, trimethyl phosphate, and trioctyl phosphate, boric acid esters such as triethyl borate and tributyl borate, and non-aqueous solvents such as N-methyloxazolidinone and N-ethyloxazolidinone. When a solid electrolyte is used, a porous polymer solid electrolyte membrane is used as a polymer solid electrolyte, and additionally an electrolyte solution may be contained in the polymer solid electrolyte. When a gel polymer solid electrolyte is used, the electrolyte solution that forms the gel may be different from the electrolyte solution contained in pores or the like. When a high output is required as in the HEV application, use of the non-aqueous electrolyte alone is more preferred to use of the solid electrolyte or the polymer solid electrolyte.

Examples of non-aqueous electrolyte salts include, but not particularly limited to, ionic compounds such as $LiClO_4$, $LiBF_4$, $LiAsF_6$, $LiPF_6$, $LiCF_3SO_3$, $LiN(SO_2CF_3)_2$, $LiN(SO_2C_2F_5)_2$, $LiN(SO_2CF_3)(SO_2C_4F_9)$, LiSCN, LiBr, LiI, $Li_2SO_4$, $Li_2B_{10}Cl_{10}$, $NaClO_4$, NaI, NaSCN, NaBr, $KClO_4$, and KSCN, and mixtures of two or more thereof.

In the energy storage device 10, these organic solvents and non-aqueous electrolyte salts are used in combination as the non-aqueous electrolytes (electrolyte solutions). Among these non-aqueous electrolytes, those using a mixture of ethylene carbonate, dimethyl carbonate, and methylethyl carbonate are preferable because lithium ions have maximum conductivity.

Next, the detailed configuration of the electrode assembly 400 will be described.

FIG. 3 is a sectional view illustrating a configuration of the electrode assembly 400 according to the embodiment of the present invention. Specifically, the drawing illustrates a cross section of the electrode assembly 400 illustrated in FIG. 2. The cross section is obtained by cutting the developed portion of the wound electrode assembly along an A-A line.

As illustrated in FIG. 3, the electrode assembly 400 is formed by laminating a positive electrode 410, a negative electrode 420, and two separators 430.

The positive electrode 410 includes an elongated strip-shaped positive electrode base material sheet made of aluminum and a positive electrode active material layer formed on a surface of the positive electrode base material sheet. The positive electrode active material layer contains a positive electrode active material.

According to the invention, the positive electrode active material layer preferably has an area of 0.3 to 100 $m^2$.

The positive electrode 410 used in the energy storage device 10 according to the present invention is not particularly different from the conventional positive electrode, and a typical positive electrode can be used. For example, known compounds can be used as the positive electrode active material without particular limitation. Among these, compounds represented by $Li_aNi_bM1_cM2_dW_xNb_yZr_zO_2$ (wherein a, b, c, d, x, y, and z satisfy $0 \le a \le 1.2$, $0 \le b \le 1$, $0 \le c \le 0.5$, $0 \le d \le 0.5$, $0 \le x \le 0.1$, $0 \le y \le 0.1$, $0 \le z \le 0.1$, and b + c + d = 1; M1 and M2 are at least one element selected from the group consisting of Mn, Ti, Cr, Fe, Co, Cu, Zn, Al, Ge, Sn, and Mg), and compounds represented by $LiNi_xMn_yCo_zO_2$ (wherein x + y + z = 1, x < 1, y < 1, and z < 1) are preferable.

The negative electrode 420 includes an elongated strip-shaped negative electrode base material sheet made of copper and a negative electrode active material layer formed on a surface of the negative electrode base material sheet. The negative electrode active material layer contains a negative electrode active material. In the present embodiment, a non-graphitizable carbon (hard carbon) is used as the negative electrode active material. The non-graphitizable carbon preferably has an average particle size D50 of 2 to 6 $\mu$m.

The average particle size D50 (also referred to as a 50% particle size or median diameter) is a particle size when a volume cumulative frequency reaches 50% in the particle size distribution of the particle size. More specifically, the average particle size D50 means a particle size when a powder is divided into two portions based on the particle size, and the amount of the powder in a larger particle size range is equal to that of the powder in a smaller particle size range.

The separator 430 is an elongated strip-shaped separator disposed between the positive electrode 410 and the negative electrode 420. The separator 430 is wound around together with the positive electrode 410 and the negative electrode 420 in the longitudinal direction (Y axis direction) to form a multi-layered laminate. Thereby, the electrode assembly 400 is formed. The configuration of the separator 430 will be described in detail below.

FIG. 4 is a sectional view illustrating a configuration of the separator 430 according to the embodiment of the present invention. Specifically, FIG. 4 is an enlarged view of the separator 430 illustrated in FIG. 3.

As illustrated in FIG. 4, the separator 430 includes a base material layer 431 and an inorganic filler layer 432.

The base material layer 431 is the main body of the separator 430. Any resin porous membrane can be used. For example, a resin porous membrane having a woven fabric formed of a polymer, a natural fiber, a hydrocarbon fiber, a glass fiber, or a ceramics fiber, or having a non-woven fiber thereof is used for the base material layer 431. The resin porous membrane preferably has a woven fabric or a non-woven polymer fiber. Particularly, the resin porous membrane preferably has a polymer woven fabric or a fleece, or is such a woven fabric or fleece. Preferable polymer fibers are non-conductive fibers of polymers selected from polyacrylonitriles (PAN), polyamides (PA), polyesters such as polyethylene terephthalate (PET) and/or polyolefins (PO) such as polypropylene (PP) and polyethylene (PE), a mixture of polyolefins, and a composite membrane thereof. The resin porous membrane may be a polyolefin microporous membrane, a non-woven fabric, paper, or the like. The resin porous membrane is preferably a polyolefin microporous membrane. The base material layer 431 preferably has a thickness of approximately 5 to 30 $\mu$m in consideration of an influence on the properties of the battery.

The inorganic filler layer 432 is disposed on at least one surface of the base material layer 431, and provided on the base material layer 431. In FIG. 4, the inorganic filler layer 432 is applied to the top surface of the base material layer 431. The inorganic filler layer 432 may be applied to the bottom surface or side surfaces of the base material layer 431. The inorganic filler layer 432, if not provided on the base material layer 431, may be disposed at least between the positive electrode 410 and the negative electrode 420, but is preferably provided on the base material layer 431 as in FIG. 4.

Specifically, the inorganic filler layer 432 is a heat-resistant coating layer containing a heat resistant inorganic particle as a heat resistant particle. The inorganic particle is not particularly limited, and any one of synthetic products and natural products can be used. Examples of the inorganic particle include kaolinite, dickite, nacrite, halloysite, odinite, berthierine, amesite, kellyite, fraiponite, brindleyite, pyrophyllite, saponite, sauconite, swinefordite, montmorillonite, beidellite, nontronite, volkonskoite, vermiculite, biotite, phlogopite, annite, eastonite, siderophyllite tetra-ferri-annite, lepidolite, polylithionite, muscovite, celadonite, iron celadonite, iron aluminoceladonite, aluminoceladonite, tobelite, paragonite, clintonite, kinoshitalite, bityite, margarite, clinochlore, chamosite, pennantite, nimite, baileychlore, donbassite, cookeite, and sudoite.

The inorganic filler layer 432 is desirably formed by dispersing an inorganic particle and a binder in a solvent to prepare a solution and applying the solution onto the base material layer 431. Examples of the binder can include polyacrylonitrile, polyvinylidene fluoride, copolymers of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, and polycarbonate. Particularly, the binder used in the present embodiment is preferably polyvinylidene fluoride (PVDF), polyacrylic acid, polymethacrylic acid, or styrene-butadiene rubber (SBR). The same binder as that above can be used for the binder used in the positive electrode 410 or negative electrode 420.

Here, in the present embodiment, the separator 430 is a separator having a reduced thickness (thickness in the Z axis direction in FIG. 4) to fall within the range of 10 to 30 $\mu$m. The thickness is preferably 26 $\mu$m or less, more preferably 22 $\mu$m or less, and still more preferably 20 $\mu$m or more.

The base material layer 431 in the separator 430 has an air permeability of 10 to 180 sec/100 cc. The air permeability is preferably 50 sec/100 cc or more. Here, the air permeability is a time that 100 cc of the air takes to pass through a membrane having a predetermined area. The method of measuring the air permeability will be described later.

The separator 430 preferably includes the inorganic filler layer 432, but may not include the inorganic filler layer 432. In the latter case, the separator 430 has an air permeability of 10 to 180 sec/100 cc, and more preferably 50 sec/100 cc or more.

Next, suppression of transient degradation of output by the thus-configured energy storage device 10, and the like will be described in detail.

**Examples**

First, a method of producing the energy storage device 10 will be described. Specifically, batteries were produced as energy storage devices in Examples 1 to 24 and Comparative Examples 1 to 5 described later as follows. Examples 1 to 24 are concerned with the energy storage device 10 according to the embodiment described above.

(1-1) Production of positive electrode

LiCoO$_2$ was used as the positive electrode active material. Acetylene black was used as a conductive aid, and PVDF was used as the binder. These materials were blended such that the positive electrode active material was 90% by mass, the conductive aid was 5% by mass, and the binder was 5% by mass. An aluminum foil having a thickness of 20 $\mu$m was used as a foil. N-methyl-2-pyrrolidone (NMP) was added to the blend of the positive electrode active material, the conductive aid, and the binder. These materials were kneaded, applied onto the foil, and dried. Then, the obtained product was pressed. Positive electrodes were produced such that the areas of the positive electrode active material layers corresponded to the values as shown in Tables 1 to 5.

(1-2) Production of negative electrode

The substances of the kinds and particle sizes shown in Tables 1 to 5 were used as the negative electrode active material. PVDF was used as the binder. The negative electrode active material and the binder were blended such that the negative electrode active material was 95% by mass and the binder was 5% by mass. A copper foil having a thickness of 15 $\mu$m was used as a foil. NMP was added to the blend of the negative electrode active material and the binder, kneaded, applied onto the foil, and dried. Then, the obtained product was pressed.

(1-3) Production of separator

Polyolefin microporous membranes having thicknesses and air permeabilities shown in Tables 1 to 5 below were used as the base material layer. In Examples 7 to 9, an inorganic particle (alumina particle), a binder (SBR), a thickener (carboxymethyl cellulose sodium, CMC), a solvent (ion exchange water), and a surfactant were mixed such that the ratio of the alumina particle to the binder was 97:3. Thus, a coating agent was produced. The coating agent was applied onto the base material layer by a gravure method, and dried at 80°C. Thus, separators including inorganic layers having inorganic filler layers were produced. Each of the inorganic filler layers had the thickness shown in Table 1.

(1-4) Generation of non-aqueous electrolyte

The non-aqueous electrolyte was prepared by adding LiPF$_6$ as an electrolyte salt to a mixed solvent of ethylene carbonate and dimethyl carbonate.

(1-5) Production of battery

The positive electrode, the negative electrode, and the separator were laminated, and wound. The wound product was inserted into a container. The non-aqueous electrolyte was injected into the container, and the container was sealed. In Examples 7 to 9, the positive electrode, the negative electrode, and the separator were laminated with the inorganic filler layer in the separator facing the positive electrode, and wound.
Next, the numeric values of the following items were determined, and evaluation tests for the battery were performed.

(2-1) Capacity density

The battery is charged at 25°C at a constant current of 4 A to 4.1 V, and then charged at a constant voltage of 4.1 V when the total charge time reached 3 hours. Subsequently, the battery is discharged to 2.4 V at a constant current. The discharge capacity at this time is defined as Q1. The capacity density is calculated by dividing the discharge capacity Q1 by the mass of the battery. Namely, the capacity density is an amount of electricity stored in a unit mass of a battery. Wherein the capacity density in Example 1 is 100%, the capacity densities in Examples 2 to 24 and Comparative Examples 1 to 5 are represented as a percentage based on the capacity density in Example 1.

(2-2) Transient output degradation rate

When the discharge capacity Q1 determined in the capacity density test is discharged in 1 hour, the current value is defined as 1 CA. The discharged battery (SOC of 0%) is adjusted to have the SOC of 50% by charging the battery at 25°C and 0.5 CA for 1 hour. The battery is discharged at 20 CA for 10 seconds. The resistance before cycling is determined by Expression 1:

$$\text{resistance} = \{(\text{voltage before energization}) - (\text{voltage at 10 seconds})\}/\text{current value} \quad \text{(Expression 1)}$$

The battery is again adjusted to have the SOC of 50%. The battery is cycled in a 25°C atmosphere 1000 times wherein one cycle includes continuous discharge at 10 CA for 30 seconds and continuous charge for 30 seconds and the time of the cycle is in 2 minutes. The resistance after cycling is discharged at 20 CA for 10 seconds within 2 hours after the cycling is completed, and the resistance after cycling is determined by Expression 1 above. The transient output degradation rate is calculated by Expression 2 below wherein the resistance before cycling is D1 and the resistance after cycling is D2:

$$\text{transient output degradation rate (\%)} = D2/D1 \times 100 \quad \text{(Expression 2)}$$

Namely, the transient output degradation rate is an index indicating the transient degradation of output of the battery. Wherein the transient output degradation rate in Example 1 is 100%, the transient output degradation rates in Examples 2 to 24 and Comparative Examples 1 to 5 are represented as a percentage based on the transient output degradation rate in Example 1.

(2-3) Low temperature input specific power

The discharged battery (SOC of 0%) is charged at 25°C and 0.5 CA for 1.6 hours, and adjusted to have the SOC of 80%. The battery is charged for 1 second in a -10°C atmosphere at 50 CA and a constant voltage in which the upper limit voltage is 4.3 V. When the current value at 1 second is the upper limit value of the setting current, the charge is performed by raising the upper limit value of the setting current. The input W is calculated by Expression 3:

$$W = (\text{voltage at 1 second}) \times (\text{current at 1 second}) \quad \text{(Expression 3)}$$

The input specific power is calculated by dividing the input W by the mass of the battery. Wherein the input specific power in Example 1 is 100%, the input specific powers in Examples 2 to 24 and Comparative Examples 1 to 5 are represented as a percentage based on the input specific power in Example 1.

(2-4) Micro-short circuit occurrence rate

After chemical forming of the battery, the battery is charged up to 20% of the rating capacity of the battery, and preserved at 25°C for 20 days. The difference between the voltage of the battery before preservation and the voltage of the battery after preservation (reduction in the voltage of the battery) is determined. The micro-short circuit occurrence rate is defined as the proportion (%) of batteries having the difference of 0.1 V or more. In Examples, the battery was charged at a constant voltage of 3.1 V for 3 hours. Then, the voltage was measured during a period from 5 minutes to 12 hours after charge of the battery. The battery was preserved at 25°C for 20 days, and then the voltage was again measured. The difference in the voltage was defined as the reduction in the voltage of the battery. The test was performed on 50 cells per level. The proportion of batteries having the difference of 0.1 V or more was calculated, and defined as the micro-short circuit occurrence rate.

(2-5) Nail penetration temperature increase rate

The discharged battery (SOC of 0%) is adjusted to have the SOC of 80% by charging the battery at 25°C and 0.5 CA for 1.6 hours. The battery is penetrated with a stainless steel nail having a diameter of 1 mm at the center of an elongated side surface of the battery. The largest value of the surface temperature of the battery after penetration is measured, and the difference between the surface temperature of the battery before penetration and that after penetration is determined. Thereby, a width of an increase in the surface temperature is calculated. Wherein the increase in the surface temperature in Example 1 is 100%, the increases in the surface temperature in Examples 2 to 24 and Comparative Examples 1 to 5 are represented as a percentage based on the increase in the surface temperature in Example 1.

Next, the air permeability in the separator (base material layer) was measured as follows.

(3-1) Pre-treatment

The separator was extracted from the battery, washed with dimethyl carbonate (DMC) quickly, and dried until the weight of the separator did not change.

(3-2) Separator overall air permeability test

Using the separator after the pre-treatment, the time that 100 cc of the air takes to pass through the separator per area of the separator specified by the Gurely method (JIS8119) is measured to obtain the overall air permeability in the separator (separator overall air permeability). When the separator includes no inorganic filler layer (includes only the base material layer), the separator overall air permeability is the air permeability in the base material layer in the separator (air permeability in the separator base material).

(3-3) Method of obtaining air permeability in base material in separator including inorganic layer

The separator is immersed in a solution of water:ethanol at 50:50 (vol%), and subjected to ultrasonic washing. After ultrasonic washing, the separator on the inorganic filler layer side is observed with an optical microscope. The separator is repeatedly subjected to ultrasonic washing until residues of the inorganic filler layer are not found in the observation. At this time, the ultrasonic washing is performed such that the temperature of the solution does not exceed 35°C. Then, the air permeability in the separator after the ultrasonic washing having no inorganic filler layer is measured, and defined as the air permeability in the separator base material.

The transient output degradation rate, capacity density, low temperature input specific power, micro-short circuit occurrence rate, nail penetration temperature increase rate, and the air permeability in the separator base material in the battery thus obtained are shown in Tables 1 to 5 below. In Tables 1 to 5 below, Examples 1 to 24 and Comparative Examples 1 to 5 are compared with respect to the transient output degradation rate, capacity density, low temperature input specific power, micro-short circuit occurrence rate, and nail penetration temperature increase rate of the battery when the thickness of the separator, the air permeability in the separator, the area of the positive electrode active material layer, and the kind of and particle size of the negative electrode active material are varied.

First, using Table 1 below, Examples 1 to 9 and Comparative Example 1 will be described. Table 1 below shows the transient output degradation rate, capacity density, low temperature input specific power, micro-short circuit occurrence rate, and nail penetration temperature increase rate of the battery in Examples 1 to 9 and Comparative Example 1 when the air permeability in the separator, the area of the positive electrode active material layer, and the kind and particle size of the negative electrode active material are fixed, and the thickness of the separator is varied.

In Table 1, "Separator overall thickness" designates the overall thickness of the separator, "Thickness of separator inorganic layer" designates the thickness of the inorganic filler layer in the separator, and "Thickness of separator base material layer" designates the thickness of the base material layer in the separator. Namely, "Separator overall thickness" is the total value of "Thickness of separator inorganic layer" and "Thickness of separator base material layer." When "Thickness of separator inorganic layer" is "0," the separator has no inorganic filler layer. "Air permeability in separator base material" designates the air permeability in the base material layer in the separator. When the separator has no inorganic filler layer, "Air permeability in separator base material" designates the overall air permeability in the separator. "Kind/D50 particle size of negative electrode" designates the kind and particle size of the negative electrode active material. "HC/5" designates that the kind of the negative electrode active material is a non-graphitizable carbon (hard carbon) and the average particle size D50 of the non-graphitizable carbon is 5 $\mu$m. The same is true in Tables 2 to 4 below.

Table 1

| | Separator overall thickness (μm) | Thickness of separator inorganic layer (μm) | Thickness of separator base material layer (μm) | Air permeability in separator base material (sec/100 cc) | Total area of positive electrode active material layer (m²) | Kind/D50 particle size of negative electrode active material (μm) | Transient output degradation rate (compared to Example 1, %) | Capacity density (compared to Example 1, %) | Low temperature input specific power (compared to Example 1, %) | Micro-short circuit occurrence rate (%) | Nail penetration temperature increase rate (compared to Example 1, %) |
|---|---|---|---|---|---|---|---|---|---|---|---|
| Example 1 | 20 | 0 | 20 | 140 | 0.7 | HC/5 | 100 | 100 | 100 | 0 | 100 |
| Example 2 | 16 | 0 | 16 | 140 | 0.7 | HC/5 | 101 | 103 | 101 | 0 | 120 |
| Example 3 | 10 | 0 | 10 | 140 | 0.7 | HC/5 | 107 | 105 | 103 | 0 | 140 |
| Example 4 | 22 | 0 | 22 | 140 | 0.7 | HC/5 | 103 | 99 | 99 | 0 | 99 |
| Example 5 | 26 | 0 | 26 | 140 | 0.7 | HC/5 | 99 | 97 | 70 | 0 | 95 |
| Comparative Example 1 | 8 | 0 | 8 | 140 | 0.7 | HC/5 | 150 | 108 | 105 | 20 | 180 |
| Example 6 | 30 | 0 | 30 | 140 | 0.7 | HC/5 | 102 | 95 | 65 | 0 | 90 |
| Example 7 | 20 | 3 | 17 | 140 | 0.7 | HC/5 | 98 | 100 | 100 | 0 | 81 |
| Example 8 | 20 | 5 | 15 | 140 | 0.7 | HC/5 | 105 | 100 | 100 | 0 | 73 |
| Example 9 | 20 | 8 | 12 | 140 | 0.7 | HC/5 | 100 | 100 | 100 | 0 | 65 |

FIG. 5 is a diagram showing the results of an evaluation test when the thickness of the separator is varied. Specifically, FIG. 5 is a graph wherein the abscissa designates "Separator overall thickness" in Table 1, and the ordinate designates "Transient output degradation rate," "Capacity density," "Low temperature input specific power," and "Nail penetration temperature increase rate" (all of them are represented as a percentage (%) to those in Example 1).

As shown in Table 1 and FIG. 5 above, when the thickness of the separator (Separator overall thickness, or Thickness of separator base material layer) is 10 to 30 $\mu$m, increases in the transient output degradation rate, the micro-short circuit occurrence rate, and the nail penetration temperature increase rate can be suppressed. When the thickness of the separator is 22 $\mu$m or less, reduction in the capacity density and the low temperature input specific power can be suppressed more significantly. When the thickness of the separator is 20 $\mu$m or more, increase in the nail penetration temperature increase rate can be suppressed more significantly. For this reason, in the present embodiment, the thickness of the separator 430 is 10 to 30 $\mu$m, preferably 22 $\mu$m or less, and more preferably 20 $\mu$m or more.

Comparing Example 1 with Examples 7 to 9, the separator including the inorganic filler layer can reduce the nail penetration temperature increase rate. For this reason, the present embodiment, the separator 430 preferably has the inorganic filler layer 432.

Next, using Table 2 below, Examples 1 and 10 to 14 and Comparative Examples 2 and 3 will be described. Table 2 below shows the transient output degradation rate, capacity density, low temperature input specific power, micro-short circuit occurrence rate, and nail penetration temperature increase rate of the battery in Examples 1 and 10 to 14 and Comparative Examples 2 and 3 when the thickness of the separator, the area of the positive electrode active material layer, and the kind and particle size of the negative electrode active material are fixed, and the air permeability in the separator base material is varied. All the separators include no inorganic filler layer, and "Air permeability in separator base material" in Table 2 designates the separator overall air permeability.

## Table 2

| | Separator overall thickness (µm) | Thickness of separator inorganic layer (µm) | Thickness of separator base material layer (µm) | Air permeability in separator base material (sec/100 cc) | Total area of positive electrode active material layer (m²) | Kind/D50 particle size of negative electrode active material (µm) | Transient output degradation rate (compared to Example 1, %) | Capacity density (compared to Example 1, %) | Low temperature input specific power (compared to Example 1, %) | Micro-short circuit occurrence rate (%) | Nail penetration temperature increase rate (compared to Example 1, %) |
|---|---|---|---|---|---|---|---|---|---|---|---|
| Example 1 | 20 | 0 | 20 | 140 | 0.7 | HC/5 | 100 | 100 | 100 | 0 | 100 |
| Comparative Example 2 | 20 | 0 | 20 | 5 | 0.7 | HC/5 | 99 | 100 | 118 | 40 | 140 |
| Example 10 | 20 | 0 | 20 | 10 | 0.7 | HC/5 | 99 | 100 | 115 | 0 | 105 |
| Example 11 | 20 | 0 | 20 | 50 | 0.7 | HC/5 | 99 | 101 | 105 | 0 | 99 |
| Example 12 | 20 | 0 | 20 | 100 | 0.7 | HC/5 | 98 | 101 | 103 | 0 | 97 |
| Example 13 | 20 | 0 | 20 | 150 | 0.7 | HC/5 | 104 | 101 | 96 | 0 | 95 |
| Example 14 | 20 | 0 | 20 | 180 | 0.7 | HC/5 | 125 | 101 | 90 | 0 | 90 |
| Comparative Example 3 | 20 | 0 | 20 | 210 | 0.7 | HC/5 | 167 | 101 | 85 | 0 | 89 |

FIG. 6 is a diagram showing the results of an evaluation test when the air permeability in the separator is varied. Specifically, FIG. 6 is a graph wherein the abscissa designates "Air permeability in separator base material" in Table 2, and the ordinate designates "Transient output degradation rate," "Capacity density," "Low temperature input specific power," and "Nail penetration temperature increase rate" (all of them are represented as a percentage (%) to those in Example 1).

As shown in Table 2 and FIG. 6 above, when the air permeability in the separator base material (separator overall air permeability) is 180 sec/100 cc or less, increase in the transient output degradation rate can be suppressed. When the air permeability of the separator is less than 10 sec/100 cc, handling is difficult and productivity reduces. Thus, the air permeability in the separator base material (separator overall air permeability) is preferably 10 sec/100 cc or more.

When the air permeability in the separator base material (separator overall air permeability) is 150 sec/100 cc or less, increase in the transient output degradation rate can be suppressed more significantly. When the air permeability in the separator base material (separator overall air permeability) is 50 sec/100 cc or more, increase in the micro-short circuit occurrence rate and the nail penetration temperature increase rate can be suppressed more significantly.

For this reason, in the present embodiment, the air permeability of the base material layer 431 in the separator 430 (or the separator 430) is 10 to 180 sec/100 cc, preferably 50 sec/100 cc or more, and more preferably 150 sec/100 cc or less.

Next, using Table 3 below, Examples 1 and 15 to 18 will be described. Table 3 shows the transient output degradation rate, capacity density, low temperature input specific power, micro-short circuit occurrence rate, and nail penetration temperature increase rate of the battery in Examples 1 and 15 to 18 when the thickness of the separator, the air permeability in the separator, the area of the positive electrode active material layer, and the kind of the negative electrode active material are fixed, and the particle size of the negative electrode active material is varied.

## Table 3

| | Separator overall thickness (μm) | Thickness of separator inorganic layer (μm) | Thickness of separator base material layer (μm) | Air permeability in separator base material (sec/100 cc) | Total area of positive electrode active material layer (m²) | Kind/D50 particle size of negative electrode active material (μm) | Transient output degradation rate (compared to Example 1, %) | Capacity density (compared to Example 1, %) | Low temperature input specific power (compared to Example 1, %) | Micro-short circuit occurrence rate (%) | Nail penetration temperature increase rate (compared to Example 1, %) |
|---|---|---|---|---|---|---|---|---|---|---|---|
| Example 1 | 20 | 0 | 20 | 140 | 0.7 | HC/5 | 100 | 100 | 100 | 0 | 100 |
| Example 15 | 20 | 0 | 20 | 140 | 0.7 | HC/1 | 98 | 99 | 100 | 0 | 110 |
| Example 16 | 20 | 0 | 20 | 140 | 0.7 | HC/2 | 101 | 100 | 100 | 0 | 105 |
| Example 17 | 20 | 0 | 20 | 140 | 0.7 | HC/6 | 103 | 101 | 100 | 0 | 99 |
| Example 18 | 20 | 0 | 20 | 140 | 0.7 | HC/7 | 110 | 100 | 89 | 0 | 97 |

FIG. 7 is a diagram showing the results of an evaluation test when the particle size of the negative electrode active material is varied. Specifically, FIG. 7 is a graph wherein the abscissa designates "D50 particle size" in Table 3, and the ordinate designates "Transient output degradation rate," "Capacity density," "Low temperature input specific power," and "Nail penetration temperature increase rate" (all of them are represented as a percentage (%) to those in Example 1).

As shown in Table 3 and FIG. 7 above, when the particle size (average particle size D50) of the negative electrode active material is 2 $\mu$m or more, increase in the nail penetration temperature increase rate can be suppressed. When the particle size (average particle size D50) of the negative electrode active material is 6 $\mu$m or less, reduction in the low temperature input specific power can be suppressed, and increase in the transient output degradation rate can be suppressed. For this reason, in the present embodiment, the average particle size D50 of the negative electrode active material is preferably 2 to 6 $\mu$m.

Next, using Table 4, Examples 1 and 19 to 24 will be described. Table 4 shows the transient output degradation rate, capacity density, low temperature input specific power, micro-short circuit occurrence rate, and nail penetration temperature increase rate of the battery in Examples 1 and 19 to 24 when the thickness of the separator, the air permeability in the separator and the kind and particle size of the negative electrode active material are fixed, and the area of the positive electrode active material layer is varied.

## Table 4

| | Separator overall thickness (μm) | Thickness of separator inorganic layer (μm) | Thickness of separator base material layer (μm) | Air permeability in separator base material (sec/100 cc) | Total area of positive electrode active material layer (m²) | Kind/D50 particle size of negative electrode active material (μm) | Transient output degradation rate (compared to Example 1, %) | Capacity density (compared to Example 1, %) | Low temperature input specific power (compared to Example 1, %) | Micro-short circuit occurrence rate (%) | Nail penetration temperature increase rate (compared to Example 1, %) |
|---|---|---|---|---|---|---|---|---|---|---|---|
| Example 1 | 20 | 0 | 20 | 140 | 0.7 | HC/5 | 100 | 100 | 100 | 0 | 100 |
| Example 19 | 20 | 0 | 20 | 140 | 0.1 | HC/5 | 97 | 70 | 80 | 0 | 103 |
| Example 20 | 20 | 0 | 20 | 140 | 0.3 | HC/5 | 101 | 100 | 90 | 0 | 105 |
| Example 21 | 20 | 0 | 20 | 140 | 10 | HC/5 | 103 | 101 | 105 | 0 | 99 |
| Example 22 | 20 | 0 | 20 | 140 | 50 | HC/5 | 110 | 101 | 120 | 0 | 99 |
| Example 23 | 20 | 0 | 20 | 140 | 100 | HC/5 | 112 | 101 | 125 | 0 | 99 |
| Example 24 | 20 | 0 | 20 | 140 | 150 | HC/5 | 115 | 101 | 130 | 0 | 99 |

FIG. 8A and FIG. 8B are diagrams showing the results of an evaluation test when the area of the positive electrode active material layer is varied. Specifically, FIG. 8A and FIG. 8B are graphs wherein the abscissa designates "Total area of positive electrode active material layer" in Table 4, the ordinate designates "Transient output degradation rate," "Capacity density," "Low temperature input specific power," and "Nail penetration temperature increase rate" (all of them are represented as a percentage (%) to those in Example 1), and the range of the abscissa is different between FIG. 8A and FIG. 8B.

As shown in Table 4 and FIG. 8A above, when the total area of the positive electrode active material layer is 0.3 $m^2$ or more, reduction in the capacity density and the low temperature input specific power can be suppressed. As shown in Table 4 and FIG. 8B above, when the total area of the positive electrode active material layer is 100 $m^2$ or less, increase in the transient output degradation rate can be suppressed. When the total area of the positive electrode active material layer is less than 0.3 $m^2$, transient degradation of output that is a problem to be solved by the present invention hardly occurs. When the total area of the positive electrode active material layer is more than 100 $m^2$, the productivity of the energy storage device will reduce. From these viewpoints, the total area of the positive electrode active material layer is preferably 0.3 to 100 $m^2$. From the viewpoint of suppressing the transient degradation of output more significantly, the total area of the positive electrode active material layer is more preferably 0.3 to 10 $m^2$.

Next, using Table 5 below, Example 1 and Comparative Examples 4 and 5 will be described. Table 5 shows the transient output degradation rate, capacity density, low temperature input specific power, micro-short circuit occurrence rate, and nail penetration temperature increase rate of the battery in Example 1 and Comparative Examples 4 and 5 when the thickness of the separator, the air permeability in the separator, the area of the positive electrode active material layer, and the particle size of the negative electrode active material are fixed, and the kind of the negative electrode active material is varied.

# Table 5

| | Separator overall thickness (μm) | Thickness of separator inorganic layer (μm) | Thickness of separator base material layer (μm) | Air permeability in separator base material (sec/100 cc) | Total area of positive electrode active material layer (m²) | Kind/D50 particle size of negative electrode active material (μm) | Transient output degradation rate (compared to Example 1, %) | Capacity density (compared to Example 1, %) | Low temperature input specific power (compared to Example 1, %) | Micro-short circuit occurrence rate (%) | Nail penetration temperature increase rate (compared to Example 1, %) |
|---|---|---|---|---|---|---|---|---|---|---|---|
| Example 1 | 20 | 0 | 20 | 140 | 0.7 | HC/5 | 100 | 100 | 100 | 0 | 100 |
| Comparative Example 4 | 20 | 0 | 20 | 140 | 0.7 | SC/5 | 140 | 90 | 80 | 0 | 103 |
| Comparative Example 5 | 20 | 0 | 20 | 140 | 0.7 | Gra/5 | 150 | 100 | 70 | 0 | 115 |

FIG. 9 is a diagram showing the results of an evaluation test when the kind of the negative electrode active material is varied. Specifically, FIG. 9 is a graph wherein the abscissa designates "Negative electrode active material" in Table 5, and the ordinate designates "Transient output degradation rate," "Capacity density," "Low temperature input specific power," and "Nail penetration temperature increase rate" (all of them are represented as a percentage (%) to those in Example 1).

As shown in Table 5 and FIG. 9 above, when the kind of the negative electrode active material is non-graphitizabie carbon ("HC"), increase in the transient output degradation rate, reduction in the capacity density and the low temperature input specific power, and increase in the nail penetration temperature increase rate can be suppressed. "SC" in Comparative Example 4 designates graphitizable carbon (soft carbon), and "Gra" in Comparative Example 5 designates graphite (graphite). Thus, in the present embodiment, non-graphitizable carbon is used as the negative electrode active material.

As above, according to the energy storage device 10 according to the embodiment of the present invention, the negative electrode 420 includes non-graphitizable carbon as the negative electrode active material, and the separator 430 has a thickness of 10 to 30 μm and an air permeability of 10 to 180 sec/100 cc. Here, by reducing the thickness of the separator 430, the separator 430 is easily influenced by expansion and contraction of the negative electrode 420 during charge and discharge at high-rate cycles, causing transient degradation of output after high-rate cycles. The present inventors found, as a result of intensive research, that the energy storage device 10 having such a configuration can suppress transient degradation of output even when the energy storage device has a thinner separator 430. Namely, the present inventors found that when non-graphitizable carbon is used as the negative electrode active material, the thickness of the separator 430 is controlled to fall within the range of 10 to 30 μm, and the air permeability is controlled to fall within the range of 10 to 180 sec/100 cc, the influence given to the separator 430 from the negative electrode 420 can be reduced, and transient degradation of output in the energy storage device 10 can be suppressed. Thereby, transient degradation of output can be suppressed in the energy storage device 10 having a thinner separator 430.

The present inventors found that in the energy storage device 10, the temperature during nail penetration will increase when the average particle size D50 of the non-graphitizable carbon in the negative electrode 420 is less than 2 μm, and the input specific power at a low temperature will reduce when the average particle size D50 is more than 6 μm. For this reason, when the non-graphitizable carbon having the average particle size D50 of 2 to 6 μm is used as the negative electrode active material in the energy storage device 10, increase in the temperature during nail penetration can be suppressed and reduction in the input specific power at a low temperature can be suppressed while transient degradation of output is suppressed.

When the separator 430 is thicker, the amount of the electrolyte solution needs to be increased, and capacity density and input and output specific powers will reduce. The present inventors found that when the separator 430 in the energy storage device 10 has a thickness more than 22 μm, capacity density and input specific power at a low temperature will reduce. For this reason, by providing the separator 430 having a thickness of 22 μm or less in the energy storage device 10, capacity density and input specific power at a low temperature can be improved while transient degradation of output is suppressed.

The present inventors found that when the separator 430 in the energy storage device 10 has a thickness less than 20 μm, the temperature during nail penetration will increase. For this reason, by providing the separator 430 having a thickness of 20 μm or more in the energy storage device 10, increase in the temperature during nail penetration can be suppressed while transient degradation of output is suppressed.

The present inventors found that when the separator 430 in the energy storage device 10 has an air permeability less than 50 sec/100 cc, the temperature during nail penetration will increase, and the micro-short circuit will occur. For this reason, by providing the separator 430 having an air permeability of 50 sec/100 cc or more in the energy storage device 10, increase in the temperature during nail penetration can be suppressed, and occurrence of the micro-short circuit can also be suppressed while transient degradation of output is suppressed.

The present inventors found that when the separator 430 in the energy storage device 10 has an air permeability of 150 sec/100 cc or less, transient degradation of output can be suppressed more significantly. For this reason, by providing the separator 430 having an air permeability of 150 sec/100 cc or less in the energy storage device 10, transient degradation of output can be suppressed.

The present inventors found that when the separator 430 in the energy storage device 10 includes the inorganic filler layer 432, the temperature during nail penetration can be reduced. For this reason, by providing the configuration of the energy storage device 10 wherein the separator 430 includes the inorganic filler layer 432, the temperature during nail penetration can be reduced while transient degradation of output is suppressed.

The present inventors found that when the positive electrode active material layer in the positive electrode 410 in the energy storage device 10 has an area less than 0.3 m$^2$, capacity density and input specific power at a low temperature will reduce. The present inventors also found that when the positive electrode active material layer has an area more than 100 m$^2$, transient degradation of output will increase. For this reason, by providing the positive electrode active material layer having an area of 0.3 to 100 m$^2$ in the positive electrode 410 in the energy storage device 10, reduction in capacity density and input specific power at a low temperature can be suppressed, and transient degradation of output can be suppressed.

As above, the energy storage device 10 according to the embodiment of the present invention has been described, but the present invention will not be limited to the embodiment.

Namely, the embodiment disclosed herein is considered in all respects as illustrated and not as restrictive. The scope of the present invention is indicated by the appended claims rather than the foregoing description, and all modifications or changes that come within the scope of the claims are intended to be embraced therein.

**Claims**

1.  An energy storage device comprising:

    a positive electrode;
    a negative electrode;
    a separator disposed between the positive electrode and the negative electrode; and
    a non-aqueous electrolyte,
    wherein the negative electrode includes non-graphitizable carbon as a negative electrode active material,
    the separator has a thickness of 10 to 30 $\mu$m and an air permeability of 10 to 180 sec/100 cc, wherein the air permeability is obtained by the method as described in the description, and **characterized in that** the positive electrode material layer has an area of 0.3 to 100 m$^2$.

2.  The energy storage device according to Claim 1,
    wherein the non-graphitizable carbon has an average particle size D50 of 2 to 6 $\mu$m.

3.  The energy storage device according to Claim 1 or 2,
    wherein the separator has a thickness of 22 $\mu$m or less.

4.  The energy storage device according to any one of Claims 1 to 3,
    wherein the separator has a thickness of 20 $\mu$m or more.

5.  The energy storage device according to any one of Claims 1 to 4,
    wherein the separator has an air permeability of 50 sec/100 cc or more.

6.  The energy storage device according to any one of Claims 1 to 5,
    wherein the separator has an air permeability of 150 sec/100 cc or less.

7.  The energy storage device according to any one of Claims 1 to 6,
    wherein the separator includes a base material layer and an inorganic filler layer.

**Patentansprüche**

1.  Energiespeichervorrichtung mit:

    einer positiven Elektrode;
    einer negativen Elektrode;
    einem zwischen der positiven Elektrode und der negativen Elektrode angeordneten Separator; und
    einem nichtwässrigen Elektrolyten,
    wobei die negative Elektrode nicht graphitisierbaren Kohlenstoff als ein aktives Material der negativen Elektrode aufweist,
    der Separator eine Dicke von 10 bis 30 $\mu$m und eine Luftdurchlässigkeit von 10 bis 180 s/100 cm$^3$ aufweist, wobei die Luftdurchlässigkeit durch das in der Beschreibung beschriebene Verfahren erhalten wird, und **dadurch gekennzeichnet, dass** die Materialschicht der positiven Elektrode eine Fläche von 0,3 bis 100 m$^2$ aufweist.

2.  Energiespeichervorrichtung nach Anspruch 1,
    wobei der nicht graphitisierbare Kohlenstoff eine durchschnittliche Teilchengröße D50 von 2 bis 6 $\mu$m aufweist.

**3.** Energiespeichervorrichtung nach Anspruch 1 oder 2,
wobei der Separator eine Dicke von 22 $\mu$m oder weniger aufweist.

**4.** Energiespeichervorrichtung nach einem der Ansprüche 1 bis 3,
wobei der Separator eine Dicke von 20 $\mu$m oder mehr aufweist.

**5.** Energiespeichervorrichtung nach einem der Ansprüche 1 bis 4,
wobei der Separator eine Luftdurchlässigkeit von 50 s/100 cm$^3$ oder mehr aufweist.

**6.** Energiespeichervorrichtung nach einem der Ansprüche 1 bis 5,
wobei der Separator eine Luftdurchlässigkeit von 150 s/100 cm$^3$ oder weniger aufweist.

**7.** Energiespeichervorrichtung nach einem der Ansprüche 1 bis 6,
wobei der Separator eine Grundmaterialschicht und eine anorganische Füllschicht aufweist.


**Revendications**

**1.** Dispositif de stockage d'énergie, comprenant :

une électrode positive ;
une électrode négative ;
un séparateur disposé entre l'électrode positive et l'électrode négative ; et
un electrolyte non aqueux,
où l'électrode négative contient un carbone non graphitisable comme matériau actif d'électrode négative,
le séparateur a une épaisseur comprise entre 10 et 30 $\mu$m et une perméabilité à l'air comprise entre 10 et 180
sec/100 cc, ladite perméabilité à l'air étant obtenue par le procédé exposé dans la description, **caractérisé en
ce que** la couche de matériau d'électrode positive a une surface comprise entre 0,3 et 100 m$^2$.

**2.** Dispositif de stockage d'énergie selon la revendication 1,
où le carbone non graphitisable a un diamètre de particule moyen D50 compris entre 2 et 6 $\mu$m.

**3.** Dispositif de stockage d'énergie selon la revendication 1 ou la revendication 2,
où le séparateur a une épaisseur égale ou inférieure à 22 $\mu$m.

**4.** Dispositif de stockage d'énergie selon l'une des revendications 1 à 3,
où le séparateur a une épaisseur égale ou supérieure à 20 $\mu$m.

**5.** Dispositif de stockage d'énergie selon l'une des revendications 1 à 4,
où le séparateur a une perméabilité à l'air égale ou supérieure à 50 sec/100 cc.

**6.** Dispositif de stockage d'énergie selon l'une des revendications 1 à 5,
où le séparateur a une perméabilité à l'air égale ou inférieure à 150 sec/100 cc.

**7.** Dispositif de stockage d'énergie selon l'une des revendications 1 à 6,
où le séparateur présente une couche de matériau de base et une couche d'agent de charge inorganique.

FIG. 1

EP 2 685 525 B1

# FIG. 2

# FIG. 3

<u>400</u>

— 430
— 420
— 430
— 410

Z
↑
Y ⊗ → X

# FIG. 4

<u>430</u>

— 432

— 431

Z
↑
Y ⊗ → X

FIG. 5

## FIG. 6

EP 2 685 525 B1

FIG. 7

EP 2 685 525 B1

EP 2 685 525 B1

FIG. 8B

## FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006032246 A
- US 2010178544 A1
- US 2011305940 A1

- EP 2650949 A1
- JP 2008277201 A
- US 2011189529 A1